# EUROPEAN PATENT APPLICATION

(11) **EP 2 123 957 A1**
(43) Date of publication of application: **25.11.2009**
(21) Application number: 08397511.0
(22) Date of filing: 21.05.2008
(51) Int. Cl.: F16L 5/02

(54) **Lead-through and support for a pipe and method for making the same**

(71) Applicant: Miettinen, Ensio, 02940 Espoo (FI)
(72) Inventor: Miettinen, Ensio, 02940 Espoo (FI)
(74) Representative: Arvela, Sakari Mikael

(57) **Abstract**

The support or lead-through comprises at least one first frame part (8) having a curved inner surface and a groove (10) on the inner surface, at least one second frame part (9) having a curved inner surface and a groove (10) therein, the inner surfaces of the frame parts (8,9) forming a closed perimeter when joined together, and at least two support pieces (1,2) for at least one pipe, each of the support pieces (1,2) having a cut-out (5,6) for at least part of the cross section of the pipe to be supported. The outer perimeter of the support pieces (1,2) is dimensioned to fit within the groove (10) of the frame parts (8,9).

## Description

The present invention relates to supports and lead-throughs for pipelines in factories and other buildings and structures.

Especially, the invention relates to lead-throughs for industrial bridges.

### Background of the invention

In factories, process spaces, bridges and tunnels different kinds of dividing walls and support structures limit the spaces. Pipelines used for delivering materials between these spaces must be lead through the limiting structures in order to transfer the materials where they are needed. This is done by making a hole and support structure on the wall or a bulkhead. This kind of structure is called a lead-through. The purpose of the lead-through is to carry the weight of the pipe and the material therein and to seal the hole between different spaces. The need of sealing and support vary according to environment wherein the pipeline is used. Sometimes only a seal is needed and the weight of the pipe is carried by separate supports and sometimes only support is needed. Spaces where there is explosion or fire hazards or need for liquid or gas tight seal require all different kind of lead-throughs.

The main problems in design and mounting of lead-throughs of pipe supports is connecting the support to the surface of the pipe and providing sufficient free play for the movement of the pipe. Usually the pipe supports are welded on the surface of the steel pipes and the sufficient play needed because of dimensional changes of long pipelines caused by changes in temperature is provided in the means by which the supports are connected to walls, ceilings or other bearing structures. Welding may be difficult to perform in pipeline systems that are usually mounted high and arranged in tight groups so that there is very little room for mounting work. Welding is also a permanent method of mounting and difficult to dismount or alter. Finally, welding causes always a risk for fire and care has to be taken in planning and performing mounting works that need welding.

Most of the support structures require special sealing structures when used as lead-throughs and they a re therefore expensive to use and require time for mounting. Especially in cases when the temperature of the pipe changes either because of atmospheric changes in temperature or because of changes in temperature of the material to be transported, the heat expansion may cause large displacements both lengthwise and sideways in the lead-through or support. When such a pipeline has to be taken through a wall or bulkhead and the lead-through has to be kept tight or fire safe, for example, the structure of the lead-through becomes complicated.

### Summary of the invention

According to the present invention, the support comprises at least one first frame part having a curved inner surface and a groove on the inner surface, at least one second frame part having a curved inner surface and a groove therein, the inner surfaces of the frame parts forming a closed perimeter when joined together, and at least two support pieces for at least one pipe, each of the support pieces having a cut-out for at least part of the cross section of the pipe top be supported. The outer perimeter of the support pieces is dimensioned to fit within the groove of a frame part.

According to the other aspects of the present invention, the support comprises at least one attachment piece that can be mounted on a bearing structure and attached to at least one of the frame parts.

According to one embodiment of the invention, the groove of at least one of the grooves of frame parts is provided with at least one spring.

Other objects and features of the invention will become apparent from the following detailed description considered in conjunction with the accompanying drawings. It is to be understood, however, that the drawings are intended solely for purposes of illustration and not as a definition of the limits of the invention, for which reference should be made to the appended claims.

### The invention provides essential benefits

The invention can be utilized as support of a pipeline or as a lead-through without any essential structural changes. The sealing degree can be easily adjusted from an open structure to fire or even explosion safe structures. The support allows movement of the pipe both in lengthwise and sideways direction. The material that contacts the pipe can be chosen so that friction against the pipe is minimal. Thus stresses can be minimized and wear on the pipe surface is small. Mounting of the support can be done easily using bolt tightening tools only. No welding or any other permanent attachment methods are needed. The structure can be made of many materials whereby the material can be chosen simply according to the environmental requirements and stresses on the place of use. The lead-through can be used as a splash water seal or as a pressure relief in eventual explosion situations or as fire seal. The support also damps vibrations of the pipeline and even special damping elements can be used. The same support can be used for several pipe sizes simply by changing the support elements whereby repairing and changing the size of the pipeline is easy. The supports may have one hole for a single pipe or several holes so that one support holds one or more pipes. According to one embodiment of the invention, the support pieces may be mounted to the frame of the support by springs. The springs may provide either a damping action to reduce pipeline vibrations or they may seal the support pieces together by pressing force. The springs may also seal the support pieces to the frame parts.

### Brief description of the drawings

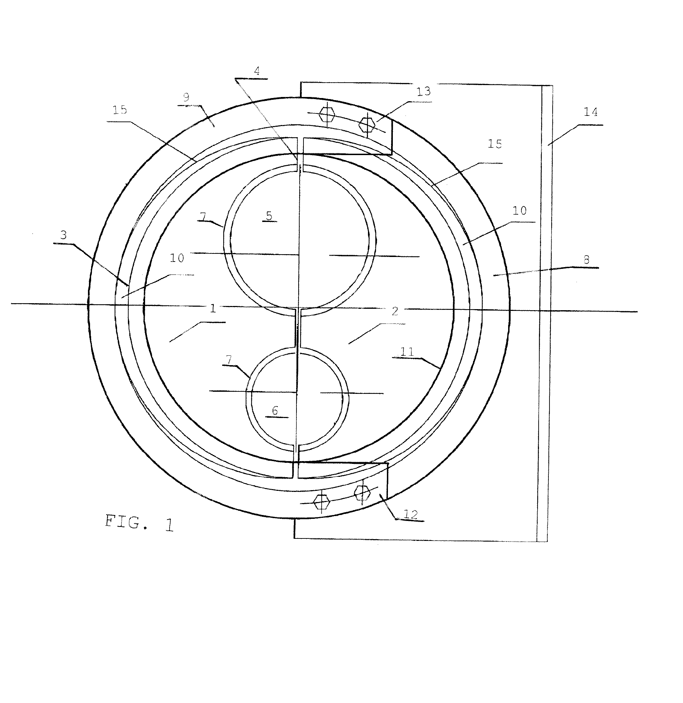

Fig. 1 shows one embodiment of the invention.

### Detailed description of the presently preferred embodiments

The embodiment described in the drawing can be used for a wall support of two pipes. The support comprises two support pieces that are symmetrical in this case. Each of the support pieces 1, 2 is formed of a semicircular part, wherein one perimeter 3 is curved outwards and one 4 is straight. The straight surface 4 comprises two cutouts 5, 6 that extend inwards from the straight part of the perimeter. The cutouts 5, 6 have collars 7 extending perpendically outwards from the surface of the support pieces 1, 2. In this case the support pieces are symmetrical and have a dividing plane in the middle when joined together. This semicircular and symmetrical form is easy to manufacture and assemble, but other forms can also be contemplated, for example a square or a polygon.

The support pieces 1, 2 are placed between frame parts 8, 9. The first frame part 8 is a semicircle having a groove 10 formed on its inner curved surface 11. The second frame part 9 is otherwise similar semicircle, but it has extensions on the ends of the circular part. The extensions 12 can be placed over the ends of the first frame part 8. The frame parts are attached to each other by bolts 13. The bolts can be used for attaching the structure to wall support piece 14 also. In this case the bolts extend through first frame part, extensions of the second frame part and wall support piece 14. The wall support piece can be provided by attachments means for attachment to a wall, ceiling or floor.

The diameter of the circular groove 10 formed inside the frame parts 8, 9 has a diameter that is larger than the diameter of the circle formed by the outer perimeters of the support pieces 1, 2. This provides for a play for the support pieces 1, 2 in the groove 10. The groove can be provided with a spring 15 that centers the support pieces 1, 2. The spring can be used also as a vibration-dampening element. In here the spring is a long circular leaf spring but any other elements providing the required play and spring force may be used. However, using several springs increases the number of the parts. Other way to dampen the vibrations is to dimension the groove and the thickness of the flange part of the support element so that the fit is sufficiently tight and a friction dampening effect is achieve. For this purpose elements for pressing the groove tighter, such as bolts, can be arranged. Further, instead of different shapes of springs or elastic material, other filling materials or elements can be used in the groove 10.

The support element can be mounted on a wall, ceiling, floor, any bulkhead or similar structure or support frame. Typical places of use are factories, storehouses, ships or any place wherein materials are transported by pipes. The mounting is performed as follows: First, a wall support piece 14 is mounted on a bearing structure, such as wall.

The form and dimensions of the support piece is chosen according to the place wherein it is attached. Second, first frame part 8 is mounted on the wall support piece 14 and the first support piece 1 is mounted on the groove of the first frame part 8. If the pipeline is already drawn in place, the support is assembled around the pipes. Otherwise pipes are placed on the cutouts of 5, 6 the first support piece 2. Next, second support piece 1 is placed over the pipes. Now the collars 7 of the support pieces 1, 2 are around the pipes and the wide collars form large support area over the pipes. Finally, second frame part 9 is slid over the second support piece 1 and the ends of the first frame part 8 and placing and tightening the bolts 13 complete the structure.

If the support is used as a lead-through, a mounting collar or a mounting frame may replace the wall support piece. The frame parts 7, 8 can be alternatively designed so that they provide for mounting to the desired wall, bulkhead or other surface on which the support is to be mounted. Both the mounting with wall support piece or by frame parts or mounting collar can be designed to be done without welding, for example by bolts. Of course, if desired, at lest part of the support can be made of steel, aluminum or other weld able material, if mounting by welding is desired.

The support according to the invention may comprise two or more cutouts for pipes or only one for a single pipe. About 80% of the pipes used presently in the industry fall between sizes DN 100 - 250. The invention is preferably used for these sizes and larger pipes than DN 250 usually require such heavy supports that the support described herein is not the preferred choice since the structure would become rather heavy.

In above it is considered that the frame parts are made of unitary single parts. However, each of them can be formed of several parts that are attached to each other for example by bolts. One such embodiment would be such that each frame part would comprise two outer elements and a spacer that provides for a space between the outer elements and forms the required groove.

The invention can be utilized for other cross sections of pipes than circular and the outer perimeter if the support pieces can be also different, for example multiangular. However, the pipes are almost always circular. Therefore circular form is preferable and easy to design.

The support can be made of metal, wood, plywood, plastic or composites. One preferable material for support pieces is PEH-plastic that can be easily pressed to form and provides resilient surface having low friction. Polyethylene provides also good properties as material for support pieces.

Thus, while there have been shown and described and pointed out fundamental novel features of the invention as applied to a preferred embodiment thereof, it will be understood that various omissions and substitutions and changes in the form and details of the de.... may be made by those skilled in the art without departing from the spirit of the invention. For example, it is expressly intended that all combinations of those elements and/or method steps which perform substantially the same results are within the scope of the invention. Substitutions of the elements from one described embodiment to another are also fully intended and contemplated. It is also to be understood that the drawings are not necessarily drawn to scale but they are merely conceptual in nature. It is the intention, therefore, to be limited only as indicated by the scope of the claims appended hereto.

## Claims

1. Support or lead-through for a pipeline, **characterized** of
- at least one first frame part (8) having a concave inner surface and a groove (10) on the inner surface,
- at least one second frame part (9) having a curved inner surface and a groove (10) therein,
- the inner surfaces of the frame parts (8, 9) being formed, so that they form a closed perimeter when joined together,
- at least two support pieces (1, 2) for at least one pipe, each of the support pieces (1, 2) having at least one cut-out (5, 6) for at least part of the cross section of the pipe to be supported, and
- the outer perimeter of the support pieces (1, 2) being dimensioned to fit within the groove (10) of a frame parts (1, 2).

2. Support according to claim 1, **characterized in that** the groove (10) of at least one of the grooves (10) of frame parts (1, 2) is provided with at least one spring (15) for at least one of the following: centering the support pieces (1, 2), sealing the support pieces (1, 2) or dampening the movement of the support pieces (1, 2).

3. A support according to claim 1 or 2, **characterized in that** at least one of the cutouts (5, 6) of the support pieces (1, 2) has a collar forming a support surface for the pipe.

4. A support according to claim 3, **characterized in that** at least the collar is made of PEH-plastic.

5. A support according to claim 2, **characterized in that** the spring is a circular leaf spring (15).

6. A support according to any of the preceding claims, **characterized in that** it comprises at least two of the following: a pair of support pieces (1, 2) having cutouts for forming a hole for one pipe size, a pair of support pieces (1, 2) having cutouts for forming a hole for one other pipe size, a pair of support pieces (1, 2) having cutouts for forming holes for at least two pipes.

7. A support according to any of the preceding claims, **characterized in that** the support pieces are symmetrical and have a dividing plane in the middle when joined together.

8. A support according to any of the preceding claims for supporting at least one pipeline on a wall, ceiling, floor, support structure or a bulkhead, in a factory, ship, storehouse or other place wherein materials are transported in pipes.
